# EUROPEAN PATENT APPLICATION

(11) **EP 4 582 927 A1**
(43) Date of publication of application: **09.07.2025**
(21) Application number: 23891863.5
(22) Date of filing: 27.10.2023
(51) Int. Cl.: G06F 3/16, G06F 1/16, H04W 4/80, G06F 3/04847, G06F 3/04842, G06F 3/0481

(54) **METHOD FOR CONTROLLING AUDIO SETTING AND WEARABLE ELECTRONIC DEVICE SUPPORTING SAME**

(30) Priority: 15.11.2022 KR 20220152908; 08.12.2022 KR 20220170365
(71) Applicant: Samsung Electronics Co., Ltd., Suwon-si, Gyeonggi-do 16677 (KR)
(72) Inventor: YOON, Jongmin, Suwon-si Gyeonggi-do 16677 (KR); KIM, Seungnyun, Suwon-si Gyeonggi-do 16677 (KR); SON, Dongil, Suwon-si Gyeonggi-do 16677 (KR); LEE, Seungjoo, Suwon-si Gyeonggi-do 16677 (KR); LIM, Gisoo, Suwon-si Gyeonggi-do 16677 (KR); CHOI, Kyusik, Suwon-si Gyeonggi-do 16677 (KR)
(74) Representative: Nederlandsch Octrooibureau
(86) International application number: PCT/KR2023/016865
(87) International publication number: WO 2024/106796

(57) **Abstract**

A wearable electronic device is provided. The wearable electronic device may comprise a communication circuit, a speaker, and at least one processor. The at least one processor may be configured to determine whether a first user of the wearable electronic device and a second user of an external electronic device are located in the same space. On the basis of determining that the first user and the second user are located in the same place, the at least one processor may be configured to control an audio setting such that an audio signal obtained from the external electronic device through the communication circuit and corresponding to the voice of the second user is not output. The at least one processor may be configured to control the audio setting to output the voice signal through the speaker, on the basis of determining that the first user and the second user are not located in the same space.

## Description

### [TECHNICAL FIELD]

The disclosure relates to a method for controlling audio setting and a wearable electronic device supporting the same.

### [BACKGROUND ART]

An increasing number of services and additional features are being offered through wearable electronic devices such as augmented reality (AR) glasses, virtual reality (VR) glasses, and head mounted display (HMD) devices. To meet the needs of various users and raise use efficiency of electronic devices, communication service carriers or device manufacturers are jumping into competitions to develop electronic devices with differentiated and diversified functionalities. Accordingly, various functions that are provided through wearable electronic devices are evolving more and more.

The wearable electronic device may execute an application, such as a game application or a virtual conference application, together with an external electronic device connected to the wearable electronic device through a network. During the application is executed, the wearable electronic device may transmit a voice inputted by a user of the wearable electronic device to the external electronic device, and receive a voice inputted by a user of the external electronic device from the external electronic device. The wearable electronic device may output the received voice through a speaker.

The above information is presented as background information only to assist with an understanding of the disclosure. No determination has been made, and no assertion is made, as to whether any of the above might be applicable as prior art with regard to the disclosure.

### [DETAILED DESCRIPTION OF THE INVENTION]

### [Technical Solution]

In a state where the user of the wearable electronic device and the user of the external electronic device are located in the same space (or in close proximity to each other), a wearable electronic device may perform an application together with the external electronic device. For example, while the user of the wearable electronic device and the user of the external electronic device are located in the same space, the wearable electronic device and the external electronic device may perform the application together in a virtual space (e.g., virtual conference space or VR/AR game space). While the application is executed in the wearable electronic device and the external electronic device, a voice uttered by the user of the external electronic device is directly transmitted to the user of the wearable electronic device (e.g., the user's ear), and may be transmitted from an external electronic device to the wearable electronic device through the network. The voice transmitted to the wearable electronic device and uttered by the user of the external electronic device may be outputted through the speaker of the wearable electronic device. The user of the wearable electronic device may be redundantly provided with the voice directly transmitted from the user of the external electronic device and the voice outputted through the speaker (e.g., the voice is provided through speaker after the voice directly transmitted from the user of the external electronic device is provided). In this case, communication between the user of the wearable electronic device and the user of the external electronic device may be difficult. It may be difficult for the user of the wearable electronic device and the user of the external electronic device to be immersed in content provided by the application.

Aspects of the disclosure are to address at least the above-mentioned problems and/or disadvantages and to provide at least the advantages described below. Accordingly, an aspect of the disclosure is to provide a method for controlling, based on whether the user of a wearable electronic device and the user of the external electronic device are located in the same space, an audio setting related to the output of a voice of the user of the external electronic device, and a wearable electronic device that supports it.

Additional aspects will be set forth in part in the description which follows and, in part, will be apparent from the description, or may be learned by practice of the presented embodiments.

In accordance with an aspect of the disclosure, a wearable electronic device is provided. The wearable electronic device may include communication circuitry, a speaker, and at least one processor. The at least one processor may be configured to identify whether a first user of the wearable electronic device and a second user of the external electronic device are located in a same space. The at least one processor may be configured to control, based on identifying that the first user and the second user are located in the same space, an audio setting such that a voice signal obtained from the external electronic device through the communication circuitry and corresponding to a voice of the second user is not outputted. The at least one processor may be configured to control, based on identifying that the first user and the second user are not located in the same space, the audio setting such that the voice signal is outputted through the speaker.

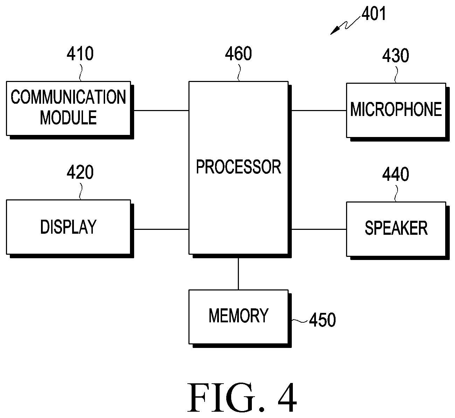

In accordance with another aspect of the disclosure, a method for controlling an audio setting in a wearable electronic device (e.g., electronic device 401 of FIG. 4) is provided. The method may include identifying whether a first user of the wearable electronic device and a second user of an external electronic device are located in a same space. The method may include based on identifying that the first user and the second user are located in the same space, controlling an audio setting such that a voice signal obtained from the external electronic device through communication circuitry of the wearable electronic device and corresponding to a voice of the second user is not outputted. The method may include based on identifying that the first user and the second user are not located in the same space, controlling the audio setting such that the voice signal is output through a speaker of the wearable electronic device.

In accordance with another aspect of the disclosure, a non-transitory computer readable medium recording computer executable instructions is provided, the computer-executable instructions, when executed, may configured to a wearable electronic device comprising at least one processor to cause to identify whether a first user of the wearable electronic device and a second user of the external electronic device are located in a same space. The computer executable instructions, when executed, may be configured to cause to the wearable electronic device comprising the at least one processor to control, based on identifying that the first user and the second user are located in the same space, an audio setting such that a voice signal obtained from the external electronic device through communication circuitry and corresponding to a voice of the second user is not outputted. The computer executable instructions, when executed, may be configured to cause to the wearable electronic device comprising the at least one processor to, control, based on identifying that the first user and the second user are not located in the same space, the audio setting such that the voice signal is outputted through a speaker.

In an embodiment, a method for controlling audio settings and a wearable electronic device supporting the same may facilitate communication between the user of the electronic device and the user of the external electronic device, and improve a user's sense of immersion in content by controlling, based on whether the user of a wearable electronic device and the user of the external electronic device are located in the same space, an audio setting related to the output of a voice of the user of the external electronic device.

Other aspects, advantages, and salient features of the disclosure will become apparent to those skilled in the art from the following detailed description, which, taken in conjunction with the annexed drawings, discloses various embodiments of the disclosure.

### [BRIEF DESCRIPTION OF DRAWINGS]

The above and other aspects, features, and advantages of certain embodiments of the disclosure will be more apparent from the following description taken in conjunction with the accompanying drawings, in which:
FIG. 1 is a block diagram illustrating an electronic device according to an embodiment of the disclosure;
FIG. 2 is a perspective view illustrating an internal configuration of a wearable electronic device according to an embodiment of the disclosure;
FIG. 3A is a front view illustrating a wearable electronic device according to an embodiment of the disclosure;
FIG. 3B is a rear view illustrating a wearable electronic device according to an embodiment of the disclosure;
FIG. 4 is a block diagram of an electronic device according to an embodiment of the disclosure of the disclosure;
FIG. 5 is a flowchart illustrating a method of controlling audio setting, according to an embodiment of the disclosure;
FIG. 6 is a diagram for illustrating a method of identifying whether a first user and a second user are located in the same space, according to an embodiment of the disclosure;
FIG. 7 is a flowchart illustrating a method of controlling an audio setting according to an embodiment of the disclosure;
FIG. 8 is a flowchart illustrating a method for controlling audio setting according to an embodiment of the disclosure;
FIG. 9 is a flow chart illustrating a method for controlling audio setting according to an embodiment of the disclosure; and
FIG. 10 is a diagram illustrating a method for controlling audio setting according to an embodiment of the disclosure.

Throughout the drawings, it should be noted that like reference numbers are used to depict the same or similar elements, features, and structures.

### [MODE FOR CARRYING OUT THE INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

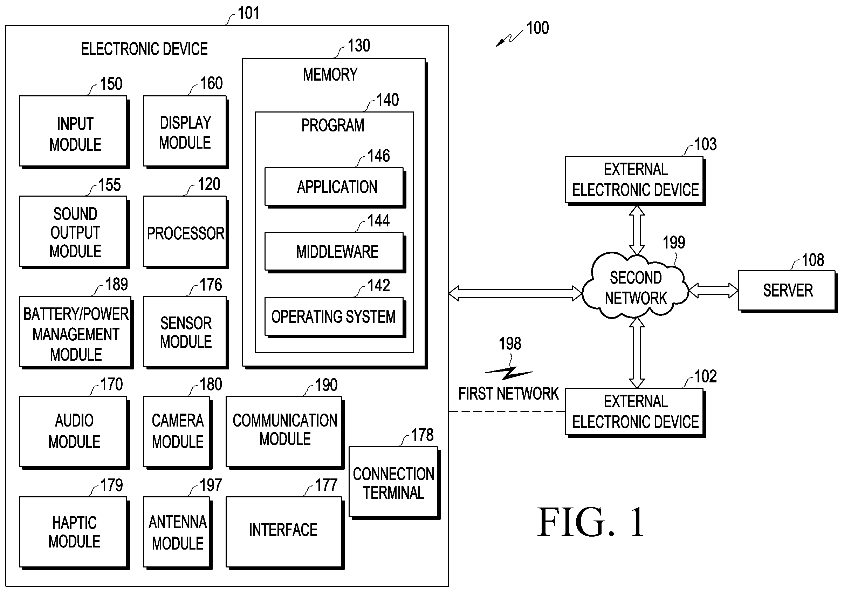

FIG. 1 is a block diagram illustrating an electronic device according to an embodiment of the disclosure.

Referring to FIG. 1, an electronic device 101 in a network environment 100 may be, e.g., a wearable electronic device worn on the user's head, such as AR glasses, VR glasses, and/or an HMD device. The electronic device 101 may also be referred to as a wearable electronic device.

External electronic devices 102 and 103 each may be a device of the same or a different type from the electronic device 101. According to an embodiment, all or some of operations to be executed at the electronic device 101 may be executed at one or more of the external electronic devices (external electronic devices 102 and 103 or server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. For example, the external electronic device 102 may render and transfer, to the electronic device 101, content data executed on an application, and the electronic device 101 receiving the data may output the content data to a display module. If the electronic device 101 detects the user's motion through, e.g., an inertial measurement unit (IMU) sensor, a processor 120 of the electronic device 101 may correct the rendering data received from the external electronic device 102 based on the motion information and output it to a display module 160. Alternatively, the electronic device 101 may transfer the motion information to the external electronic device 102 and request rendering so that screen data is updated accordingly. According to various embodiments, the external electronic device 102 may be various types of devices, such as a smart phone or a case device capable of storing and charging the electronic device 101.

According to an embodiment, the electronic device 101 may communicate with an external electronic device 102 via a first network 198 (e.g., a short-range wireless communication network), and/or an external electronic device 103 or a server 108 via a second network 199 (e.g., a long-range wireless communication network). According to an embodiment, the electronic device 101 may communicate with another electronic device via the server 108. According to an embodiment, the electronic device 101 may include a processor 120, a memory 130, an input module 150, a sound output module 155, a display module 160, an audio module 170, a sensor module 176, an interface 177, a connection terminal 178, a haptic module 179, a camera module 180, a power management module and/or a battery 189, a communication module 190, or an antenna module 197. In an embodiment, at least one (e.g., the connection terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

According to an embodiment, the processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or audio module 170 or communication module 190) onto a volatile memory, process the command or the data stored in the volatile memory, and store resulting data in a non-volatile memory. According to an embodiment, the processor 120 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor and the auxiliary processor, the auxiliary processor may be configured to use lower power than the main processor or to be specified for a designated function. The auxiliary processor may be implemented separately from, or as part of, the main processor. The auxiliary processor may control at least some of functions or states related to at least one component (e.g., display module 160, sensor module 176, or communication module 190) of the electronic device 101, instead of the main processor while the main processor is in an inactive (e.g., sleep) state or along with the main processor while the main processor is an active state (e.g., executing an application). According to an embodiment, the auxiliary processor (e.g., an image signal processor or a communication processor) may be implemented as part of another component (e.g., the camera module 180 or the communication module 190) functionally related to the auxiliary processor 123. According to an embodiment, the auxiliary processor (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

According to an embodiment, the memory 130 may store various data used by at least one component (e.g., the processor 120 or the sensor module 176) of the electronic device 101. The various data may include, for example, software (e.g., the program 140) and input data or output data for a command related thereto. The memory 130 may include a volatile memory or a non-volatile memory.

According to an embodiment, the program 140 may be stored in the memory 130 as software, and may include, for example, an operating system (OS) 142, middleware 144, or an application 146.

According to an embodiment, the input module 150 may receive a command or data to be used by another component (e.g., the processor 120) of the electronic device 101, from the outside (e.g., a user) of the electronic device 101. The input module 150 may include, but is not limited to, a microphone, a button, and/or a touch pad.

According to an embodiment, the sound output module 155 may output sound signals to the outside of the electronic device 101. The sound output module 155 may include, e.g., a speaker. The speaker may be used for general purposes, such as playing multimedia or playing record.

According to an embodiment, the display module 160 may visually provide information to the outside (e.g., the user) of the electronic device 101. For example, when the electronic device 101 is implemented as AR glasses, the display module 160 may include, but is not limited thereto, e.g., a liquid crystal display (LCD), a digital mirror device (DMD), a liquid crystal on silicon (LCoS), light emitting diode (LED) on silicon (LEDoS), organic light emitting diode (OLED), or micro light emitting diode (micro LED). The display module 160 may have different implementation forms depending on the type of electronic device 101.

According to an embodiment, the audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101. The external electronic device 102 may be, e.g., a mobile device, such as a smart phone or tablet PC, but is not limited thereto.

According to an embodiment, the sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, and/or an illuminance sensor.

According to an embodiment, the interface 177 may support one or more specified protocols to be used for the electronic device 101 to be coupled with the external electronic device (e.g., external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

According to an embodiment, the connection terminal 178 may include a connector via which the electronic device 101 may be physically connected with the external electronic device (e.g., external electronic device 102). According to an embodiment, the connection terminal 178 may include, for example, an HDMI connector, a USB connector, an SD card connector, or an audio connector (e.g., a headphone connector).

According to an embodiment, the haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

According to an embodiment, the camera module 180 may capture a still image and a video. According to an embodiment, the camera module 180 may include one or more lenses, image sensors, image signal processors, or flashes.

According to an embodiment, the power management module and/or the battery 189 may manage power supplied to the electronic device 101. According to an embodiment, the power management module and/or the battery 189 may be implemented as at least part of, for example, a power management integrated circuit (PMIC). The power management module and/or the battery 189 may supply power to at least one component of the electronic device 101. According to an embodiment, the power supply module and/or the battery 189 may include, for example, a primary cell which is not rechargeable, a secondary cell which is rechargeable, or a fuel cell.

According to an embodiment, the communication module 190 may support establishing a direct (e.g., wired) communication channel or a wireless communication channel between the electronic device 101 and the external electronic device (e.g., external electronic device 102, external electronic device 103, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device 102 or 103 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module may identify or authenticate the electronic device 101 in a communication network, such as the first network 198 or the second network 199, using subscriber information (e.g., international mobile subscriber identity (IMSI)) stored in the subscriber identification module.

The wireless communication module may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module may support a high-frequency band (e.g., the millimeter wave (mmWave) band) to achieve, e.g., a high data transmission rate. The wireless communication module may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module may support various requirements specified in the electronic device 101, an external electronic device (e.g., the external electronic device 103), or a network system (e.g., the second network 199). According to an embodiment, the wireless communication module may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC. As described above, when the electronic device 101 supports cellular communication, such as 4G and 5G, the electronic device 101 may be referred to as a standalone (SA) type electronic device. Meanwhile, the electronic device 101 may be implemented not to support cellular communication, such as 4G and 5G. In this case, the electronic device 101 may use the Internet via the external electronic device 102 supporting cellular communication using the first network 198 in which case the electronic device 101 may be referred to as a non-standalone type electronic device.

According to an embodiment, the antenna module 197 may transmit or receive a signal or power to or from the outside (e.g., the external electronic device). According to an embodiment, the antenna module 197 may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 102 or 103 via the server 108 coupled with the second network 199. The external electronic devices 102 and 103 each may be a device of the same or a different type from the electronic device 101. According to an embodiment, all or some of operations to be executed at the electronic device 101 may be executed at one or more of the external electronic devices (external electronic devices 102 and 103 or server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 103 may include an Internet-of-things (IoT) device. The server 108 may be an intelligent server using machine learning and/or a neural network. According to an embodiment, the external electronic device 103 or the server 108 may be included in the second network 199. The electronic device 101 may be applied to intelligent services (e.g., smart home, smart city, smart car, or health-care) based on 5G communication technology or IoT-related technology.

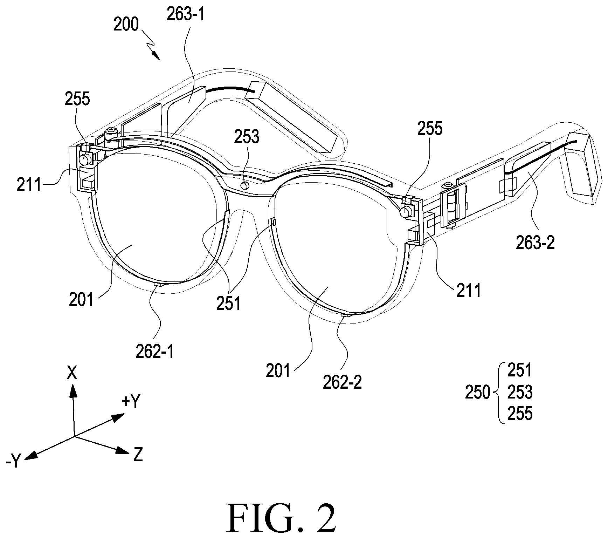

FIG. 2 is a perspective view illustrating an internal configuration of a wearable electronic device according to an embodiment of the disclosure.

Referring to FIG. 2, according to an embodiment of the disclosure, a wearable electronic device 200 may include at least one of a light output module 211, a display member 201, and a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), a light emitting diode (LED on silicon (LEDoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

According to an embodiment of the disclosure, the wearable electronic device 200 may include audio input devices 262-1 and 262-2 and audio output devices 263-1 and 263-2.

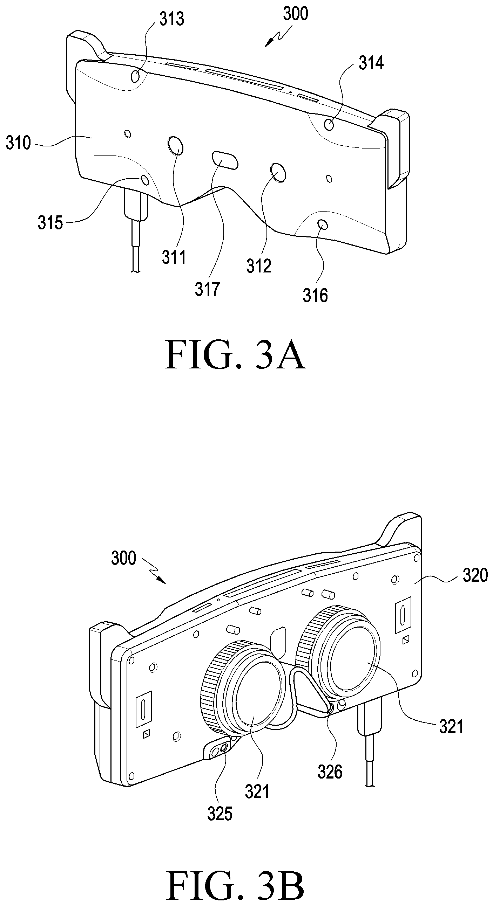

FIG. 3A is a front view illustrating a wearable electronic device according to an embodiment of the disclosure.

FIG. 3B is a rear view illustrating a wearable electronic device according to an embodiment of the disclosure.

Referring to FIGS. 3A and 3B, in an embodiment, camera modules 311, 312, 313, 314, 315, and 316 and/or a depth sensor 317 for obtaining information related to the ambient environment of a wearable electronic device 300 may be disposed on a first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). For example, alternatively or additionally to the depth sensor 217, the camera modules 313, 314, 315, and 316 may identify the distance to the object.

According to an embodiment, camera modules 325 and 326 for face recognition and/or a display 321 (and/or lens) may be disposed on a second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

FIG. 4 is a block diagram of an electronic device according to an embodiment of the disclosure.

Referring to FIG. 4, in an embodiment, an electronic device 401 (e.g., the electronic device 101, the wearable electronic device 200, or the wearable electronic device 300) may include a communication module 410 and a display 420), a microphone 430, a speaker 440, a memory 450, and/or a processor 460.

In an embodiment, the communication module 410 may be the communication module 190 of FIG. 1.

In an embodiment, the communication module 410, while the same application is executed in the electronic device 401 and the external electronic device, if a voice is uttered by a user of the electronic device 401 (e.g., a user wearing the electronic device 401) (hereinafter referred to as a "a first user"), a voice signal (or voice data) corresponding to the uttered voice may transmit to the external electronic device. If a voice is uttered by a user of the external electronic device (e.g., the user wearing the external electronic device) (hereinafter referred to as a "a second user") while the same application is executed in the electronic device 401 and the external electronic device, the communication module 410 may receive a voice signal corresponding to the uttered voice.

In an embodiment, the communication module 410 may connect the electronic device 401 to an external sound output device (e.g., earphone) a wiredly or wirelessly.

In an embodiment, the communication module 410 may provide information for identifying whether the first user and the second user are located in the same space. The information provided by the communication module 410 will be described later in detail. In an embodiment, identifying whether the first user and the second user are located in the same space may include determining whether the first user and the second user are located in the same space.

In an embodiment, the display 420 may be the display module 160 of FIG.1, the light output module 211 of FIG. 2, and/or the display 321 of FIGS. 3A and 3B.

In an embodiment, the microphone 430 may be included in the input module 150 of FIG. 1. The microphone 430 may be the audio input devices 262-1 and 262-2 of FIG. 2.

In an embodiment, a sound obtained through the microphone 430 from outside may be converted into an electrical signal in an audio module (not shown) (e.g., the audio module 170), and the converted electrical signal may be transmitted to the processor 460.

In an embodiment, the speaker 440 may be the sound output module 155 of FIG. 1 or the audio output devices 263-1 and 263-2 of FIG. 2.

In an embodiment, the speaker 440 may externally output a sound (sound signal) converted from an electrical signal in an audio module (not shown).

In an embodiment, the memory 450 may be the memory 130 of FIG. 1.

In an embodiment, the memory 450 may store information for performing an operation controlling the audio setting. The information stored in the memory 450 will be described later.

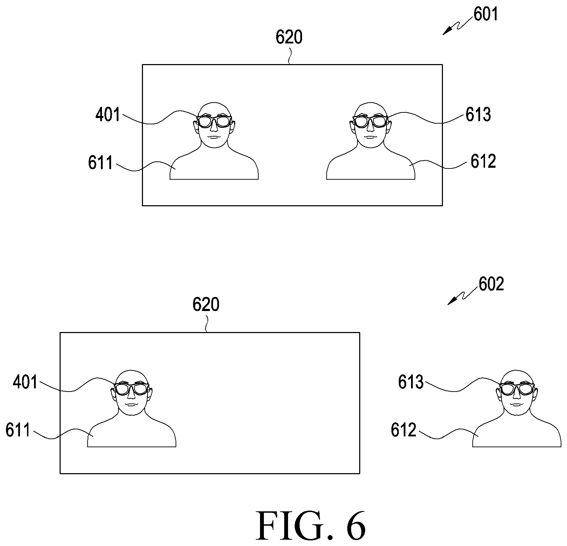

In an embodiment, the processor 460 may control the overall operation of controlling audio setting. In an embodiment, the processor 460 may comprise one or more processors for performing the operation controlling audio setting. The operation controlling audio setting by the processor 460 will be described below with reference to FIG. 6.

Although not shown in FIG. 4, the electronic device 401 may comprise one or more components for determining whether the first user and the second user are located in the same space. For example, the electronic device 401 may further comprise a camera (e.g., the camera module 180, the second camera module 253, the third camera module 255, and the camera modules 311, 312, 313, 314, 315, and 316, and/or a sensor (e.g., a global positioning system (GPS)).

Although the electronic device 401 is illustrated in FIG. 4 as comprising the communication module 410, the display 420, the microphone 430, the speaker 440, the memory 450, and/or the processor 460, which is not limited to this. For example, the electronic device 401 may further comprise at least one of the components shown in FIG. 1 or may not comprise some of the components shown in FIG. 4.

The wearable electronic device 401 according to an embodiment may comprise the communication module 410, the speaker 440, and at least one processor 460. The at least one processor 460 may be configured to identify whether a first user of the wearable electronic device 401 and a second user of the external electronic device are located in a same space. The at least one processor 460 may be configured to control, based on identifying that the first user and the second user are located in the same space, audio setting such that a voice signal obtained from the external electronic device through the communication module 410 and corresponding to a voice of the second user is not outputted. The at least one processor 460 may be configured to control, based on identifying that the first user and the second user are not located in the same space, the audio setting such that the voice signal is outputted through the speaker 440.

In an embodiment, the at least one processor 460 may be configured to identify whether the first user and the second user are located in a same room.

In an embodiment, the at least one processor 460 may be configured to identify whether a distance between the first user and the second user is less than or equal to a designated distance.

In one embodiment, the at least one processor 460 may be configured to control, based on identifying that the first user and the second user are located in the same space, the audio setting such that the voice signal is not outputted through the speaker 440.

In an embodiment, based on the identifying that the first user and the second user are located in the same space, the at least one processor 460 may be configured to transmit, through the communication module 410 to the external electronic device, a control signal configured to cause the external electronic device not to transmit the voice signal.

In an embodiment, the at least one processor 460 may be configured to, based on a first user input, control the audio setting such that the voice signal is not outputted, and based on a second user input, control the audio setting such that the voice signal is outputted through the speaker 440.

In an embodiment, the wearable electronic device 401 further comprises the microphone 430, and the at least one processor 460 may be configured to identify a first volume of the voice of the second user obtained through the microphone 430, identify whether the first volume is greater than or equal to a first reference intensity, and based on identifying that the first volume is equal to or greater than the first reference intensity, control the audio setting such that the voice signal is not outputted.

In an embodiment, the at least one processor 460 may be configured to identify a second volume of the voice of the second user obtained from the external electronic device, and based on identifying that the first volume is less than the first reference intensity, based on the second volume, control the audio setting such that the voice signal is outputted through the speaker 440.

In an embodiment, the at least one processor 460 may be configured to identify whether an earphone is connected to the wearable electronic device 401, based on the earphone being connected to the wearable electronic device 401, identify an intensity of an external noise obtained through the microphone 430, identify whether the intensity of the external noise is less than or equal to a reference intensity, based on identifying that the intensity of the external noise is equal to or less than the reference intensity, control the audio setting such that the voice signal is not outputted, and based on identifying that the intensity of the external noise exceeds the reference intensity, control the audio setting such that the voice signal is outputted through the earphone.

In an embodiment, the at least one processor 460 may be configured to, based on the second user including a plurality of second users, identify at least one user located in a same space as the first user among the plurality of second users, and set a first sound mode or a second sound mode for each of the at least one user.

In an embodiment, the first sound mode may be a mode set to output a voice signal corresponding to a voice of a user set as the first sound mode through an earphone connected to the wearable electronic device 401, and the second sound mode may be a mode set not to output a voice signal corresponding to a user set as the second sound mode.

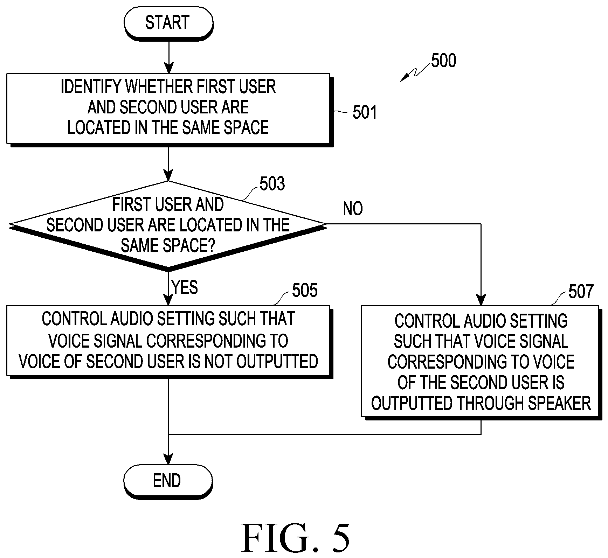

FIG. 5 is a flowchart 500 illustrating a method of controlling audio setting, according to an embodiment of the disclosure.

FIG. 6 is a diagram for illustrating a method of identifying whether a first user and a second user are located in the same space, according to an embodiment of the disclosure.

Referring to FIGS. 5 and 6, in operation 501, in one embodiment, the processor 460 may identify whether the user (first user) of an electronic device 401 and the user (second user) of the external electronic device are located in the same space.

In an embodiment, while a designated application is executed in the electronic device 401 and the external electronic device, the processor 460 may identify whether the first user and the second user are located in the same space. For example, as a game application or a virtual conference application is executed in the electronic device 401 and the external electronic device, the electronic device 401 and the external electronic device are connected together to a server supporting the game application or the virtual conference application. After the electronic device 401 and the external electronic device are connected to the server (e.g., while the game application or the virtual conference in which the first user and the second user participate by executing the game application or the virtual conference application is in progress), may perform an operation identifying whether the first user and the second user are located in the same space.

However, the game application or the virtual conference application is exemplified as the designated application executed in the electronic device 401 and the external electronic device, but is not limited thereto. For example, the designated application may include an application by which the electronic device 401 and an external electronic device can exchange (transmit or receive), while the application is executed in the electronic device 401 and the external electronic device, a voice signal corresponding to a voice uttered by the first user (hereafter also referred to as "a voice of the first user") and/or a voice signal corresponding to a voice uttered by the second user (hereinafter also referred to as "a voice of the second user").

In an embodiment, the processor 460 may identify whether the first user and the second user are located in the same space using at least one of various methods.

In an embodiment, the processor 460, may identify, based on an image obtained using a camera (e.g., the camera of the electronic device 401), whether the first user and the second user are located in the same space. For example, the processor 460 may obtain, using a camera (e.g., at least one of the camera module 180, the second camera module 253, the third camera module 255, or the camera modules 311, 312, 313, 314, 315, and 316), an image regarding a surrounding space (or a surrounding environment) of the electronic device 401 (or the first user wearing the electronic device 401). When the second user (e.g., a face of the second user) is detected (e.g., recognized) in the obtained image, the processor 460 may identify that the first user and the second user are located in the same space. If the second user is not detected in the obtained image, the processor 460 may identify that the first user and the second user are not located in the same space. Though the above example illustrates that the processor 460 may identify, using the camera of the electronic device 401, whether the first user and the second user are located in the same space, but is not limited thereto. For example, the external electronic device may obtain an image of a space around the external electronic device using a camera of the external electronic device. The processor 460 may receive the image obtained by the external electronic device from the external electronic device through the communication module 410. The processor 460 may identify, based on whether the first user (e.g., the face of the first user) is detected (e.g., recognized) in the received image, whether the first user and the second user are located in the same space. For example, the external electronic device may identify, based on the image of the space around the external electronic device obtained using the camera of the external electronic device, may identify whether the first user and the second user are located in the same space. The processor 460 may identify, whether the first user and the second user are located in the same space by obtaining information about whether the first user and the second user are located in the same space from the external electronic device through the communication module 410.

In one embodiment, the processor 460 may identify, based on information obtained through a sensor (e.g., a GPS sensor), whether the first user and the second user are located in the same space. For example, the processor 460 may obtain a location of the electronic device 401 by using a GPS sensor. The processor 460 may receive a location of the external electronic device through the communication module 410. The processor 460 may identify, based on the location of the electronic device 401 and the location of the external electronic device, whether the first user and the second user are located in the same space. The processor 460 may obtain, based on the location of the electronic device 401 and the location of the external electronic device, a distance between the electronic device 401 and the external electronic device. The processor 460 may identify that the first user and the second user are located in the same space if the obtained distance is less than or equal to the designated distance. The processor 460 may identify that the first user and the second user are not located in the same space if the obtained distance exceeds the designated distance.

In an embodiment, the processor 460 may identify, using the communication module 410, whether the first user and the second user are located in the same space. For example, the processor 460 may obtain the distance between the electronic device 401 and the external electronic device using a Bluetooth^{™} low energy (BLE) signal, an iBeacon signal, and/or an ultra wide band (UWB) signal. The processor 460 may identify that the first user and the second user are located in the same space if the obtained distance is less than or equal to the designated distance. The processor 460 may identify that the first user and the second user are not located in the same space if the obtained distance exceeds the designated distance.

In an embodiment, the processor 460 may identify, based on network information of the electronic device 401 and the external electronic device, whether the first user and the second user are located in the same space. For example, the processor 460 may identify, based on identifying that the electronic device 401 and the external electronic device access the same access point (AP) (e.g., Wi-Fi AP), that the first user and the second user are positioned in the same space.

In an embodiment, the processor 460 may identify, based on the voice of the second user, whether the first user and the second user are located in the same space. For example, if the voice of the second user is obtained using the microphone 430 of the electronic device 401, the processor 460 may identify that the first user and the second user are located in the same space. For example, the processor 460 may identify, based on a voice signal of the second user received from the external electronic device through the communication module 410 and the voice obtained using the microphone 430 of the electronic device 401, whether the first user and the second user are located in the same space. The processor 460 may receive, through the communication module 410, a voice signal (hereinafter referred to as "a voice signal of the second user") corresponding to the voice of the second user obtained by the external electronic device (e.g., a microphone of the external electronic device). The processor 460 may identify if the received voice signal of the second user and the voice obtained using the microphone 430 correspond, that the first user and the second user are located in the same space. The processor 460 may identify, if the received voice signal of the second user does not correspond to the voice obtained using the microphone 430 (or if a voice is not obtained using the microphone 430 before receiving the voice signal of the second user), that the first user and the second user are not located in the same space.

In an embodiment, the operation of identifying whether the first user and the second user are located in the same space may comprise the operation of identifying whether the first user and the second user are located in the same room (or place). For example, as shown at reference numeral 601, the processor 460 may identify, if a first user 611 wearing the electronic device 401 and a second user 612 wearing an external electronic device 613 are located in a same room (e.g., room 620), that the first user and the second user are located in the same space. For example, as shown by reference numeral 602, the processor 460, if the first user 611 wearing the electronic device 401 is located in the room 620 and the second user 612 is located outside the room 620, may identify that the second user are not located in the same space (the first user and the second user are located in different spaces).

In an embodiment, the processor 460 may identify, based on the image obtained using a camera (e.g., the camera of the electronic device 401) (and/or the camera of the external electronic device), whether the first user and the second user are located in the same room.

In an embodiment, the processor 460 may identify whether the first user and the second user are located in the same room based on the voice of the second user. For example, if the voice of the second user is obtained using the microphone 430 of the electronic device 401, the processor 460 may identify that the first user and the second user are located in the same room. For example, the processor 460 may identify, based on the voice signal of the second user received from the external electronic device through the communication module 410 and the voice obtained using the microphone 430 of the electronic device 401, that the first user and the second user are located in the same room.

In an embodiment, the operation of identifying whether the first user and the second user are located in the same space may comprise an operation of identifying whether a distance between the electronic device 401 (or the first user) and the external electronic device (or the second user) is less than or equal to the designated distance. For example, as described above, the processor 460 may obtain a distance between the electronic device 401 and an external electronic device using the communication module 410 and/or a sensor (e.g., a GPS sensor). The processor 460 may identify that the first user and the second user are located in the same space if the obtained distance is less than or equal to the designated distance. The processor 460 may identify that the first user and the second user are not located in the same space if the obtained distance exceeds the specified distance.

If it is identified that the first user and the second user are located in the same space in operation 503, in operation 505, in an embodiment, the processor 460 may control audio setting such that the voice signal corresponding to the voice of the second user is not outputted.

In an embodiment, the processor 460 may control, based on identifying that the first user and the second user are located in the same space, the audio setting such that the voice signal corresponding to the voice of the second user is not outputted through the speaker 440. For example, while a designated application is executed, the processor 460 may receive the voice signal (the voice signal of the second user) corresponding to the voice of the second user obtained by the external electronic device (e.g., the microphone of the external electronic device) through the communication module 410 from the external electronic device. The processor 460 may set, based on identifying that the first user and the second user are located in the same space, the audio setting such that the received voice signal of the second user is not outputted through the speaker 440. The processor 460 may set, based on identifying that the first user and the second user are located in the same space, an audio path of the electronic device 401 such that the received voice signal of the second user is not outputted through the speaker 440.

In an embodiment, the operation of controlling the audio setting such that the voice signal corresponding to the voice of the second user is not outputted through the speaker 440 may comprise an operation of controlling the external electronic device such that the external electronic device does not transmit the voice signal of the second user obtained by the external electronic device to the electronic device 401. For example, the processor 460 may transmit, based on identifying that the first user and the second user are located in the same space, through the communication module 410, a control signal configured to cause the external electronic device not to transmit the voice signal to the electronic device 401.

In an embodiment, in a case that the first user and the second user are located in the same space, by controlling, by the processor 460, the audio setting such that the voice signal corresponding to the voice of the second user is not outputted through the speaker 440, only the voice of the second user between the voice of the second user and the voice signal of the second user may be delivered to the first user.

If it is identified that the first user and the second user are not located in the same space in operation 503, in operation 507, in an embodiment, the processor 460 may control audio setting to output the voice signal corresponding to the voice of the second user through the speaker 440.

In an embodiment, the processor 460 may control, based on identifying that the first user and the second user are not located in the same space, the speaker 440 (and the audio module) to output the voice signal of the second user through the speaker 440. For example, the processor 460 may set, based on identifying that the first user and the second user are not located in the same space, audio setting to output the voice signal of the second user received from the external electronic device through the communication module 410. The processor 460 may set, based on identifying that the first user and the second user are not located in the same space, the audio path of the electronic device 401 to output the second user's voice signal received from the external electronic device through the communication module 410.

Although not shown in FIG. 5, in an embodiment, the processor 460 may control audio setting, based on a user input. For example, the processor 460 may control, based on a first user input, audio setting such that the second user's voice signal is not outputted. The processor 460 may control, based on a second user input, audio setting to output the second user's voice signal through the speaker 440.

In the foregoing examples, the operation of controlling audio setting regarding one external electronic device or one second user has been described, but is not limited thereto. For example, the processor 460 may perform operations 501, 503, 505, and 507 described above as to a plurality of second users (second users corresponding to the plurality of external electronic devices, respectively) while the designated application is executed in the electronic device 401 and a plurality of external electronic devices. For example, the processor 460 may control, based on a user input, the audio setting for each of the plurality of electronic devices 401 while the designated application is executed in the electronic device 401 and the plurality of external electronic devices.

In one embodiment, the processor 460 may control audio setting differently according to a type of audio output device which is to output the second user's voice signal obtained from the external electronic device.

In an embodiment, a first type of sound output device may include a sound output device (e.g., an earphone connected to the electronic device 401 wiredly or wirelessly) having a form that completely shields the user's ear (e.g., ear hole) when worn. A second type of sound output device, like the audio output devices 263-1 and 263-2 of FIG. 2, may include a sound output device having a form that does not completely cover the user's ear (e.g., ear hole) when worn. For example, the speaker 440 may be the first type of the sound output device. An earphone connected to the electronic device 401 wiredly or wirelessly may be the second type of the sound output device.

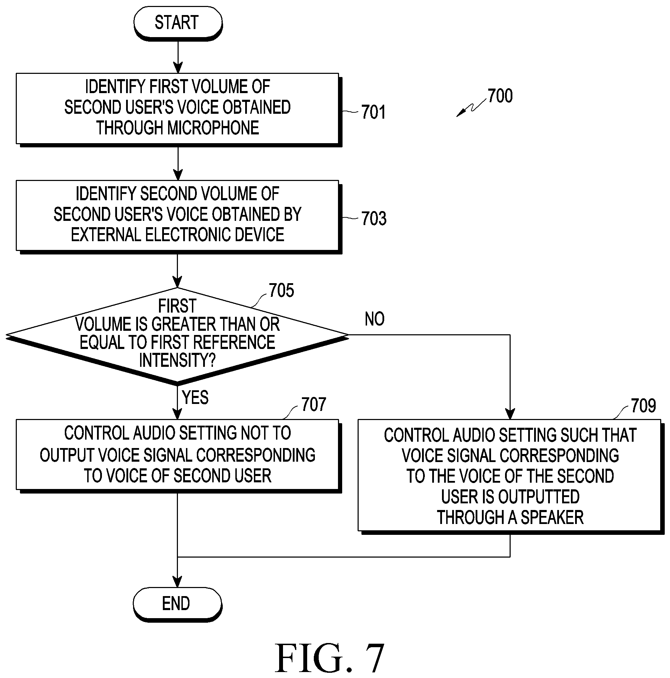

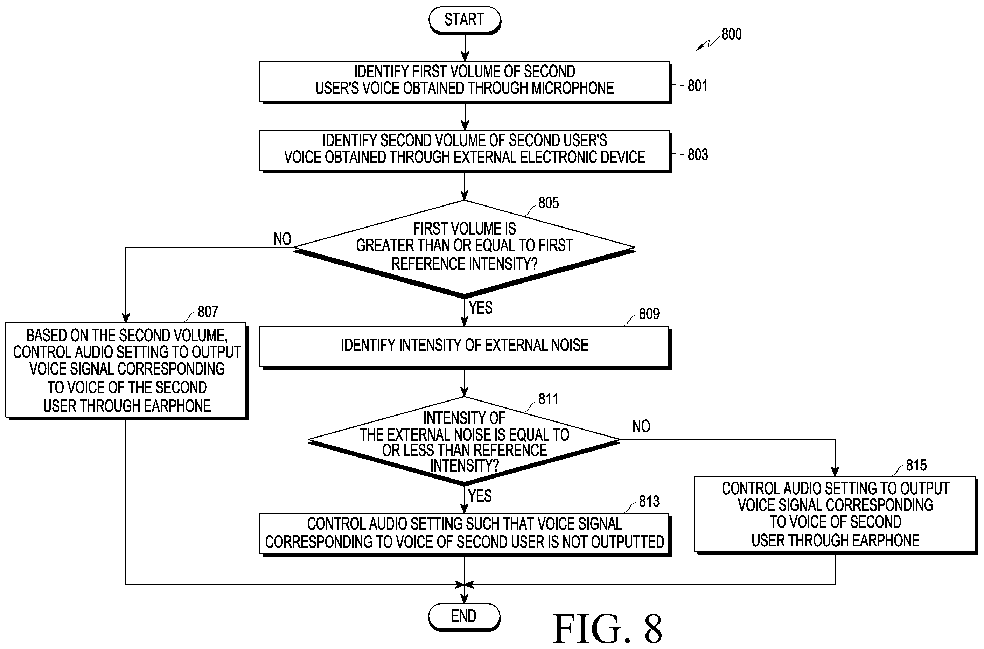

In an embodiment, the operation of controlling the audio setting differently according to the type of the audio output device which is to output the second user's voice signal obtained from the external electronic device may comprise an operation of controlling the audio setting differently depending on whether the earphone is connected to the electronic device 401. For example, if the earphone is not connected to the electronic device 401, the processor 460 may perform an operation of FIG. 7 to be described later. If the earphone is connected to the electronic device 401, the processor 460 may perform an operation of FIG. 8 to be described later.

FIG. 7 is a flowchart 700 illustrating a method of controlling an audio setting according to an embodiment of the disclosure.

In an embodiment, FIG. 7 may be a diagram for explaining operations performed based on identifying that the first user and the second user are located in the same space. For example, FIG. 7 may be a diagram for describing operations comprised in or replacing operation 505 of FIG. 5. In an embodiment, FIG. 7 may be a diagram for explaining operations performed based on the earphone are not connected to the electronic device 401 as described above.

Referring to FIG. 7, in operation 701, in an embodiment, a processor 460 may identify a volume (hereinafter, also referred to as "a first volume") of the voice of the second user obtained through a microphone 430.

In an embodiment, the processor 460, if the first user and the second user are located in the same space, may identify the volume (e.g., an intensity of the voice) of the second user's voice obtained through the microphone 430 (e.g., obtained as a voice uttered by the second user inputted to the microphone 430).

In operation 703, according to an embodiment, the processor 460 may identify the volume of the second user's voice (hereinafter, also referred to as "a second volume") obtained by the external electronic device.

In an embodiment, the external electronic device may obtain the voice of the second user through a microphone of the external electronic device. The processor 460 may receive the voice signal corresponding to the second user's voice obtained by the external electronic device through the communication module 410 from the external electronic device. The processor 460 may identify, based on the received voice signal, the volume of the second user's voice obtained from the external electronic device.

Although the above example illustrates identifying the volume of the second user's voice obtained by the external electronic device, it is not limited thereto. For example, the processor 360 may identify, instead of the operation of identifying the volume of the second user's voice obtained by the external electronic device, may identify the strength of the second user's voice obtained by the external electronic device and to be outputted through the speaker 440.

Though FIG. 7 illustrates that operation 701 is performed prior to operation 703, but is not limited thereto. For example, operation 703 may be performed prior to operation 701, or operation 703 and operation 701 may be performed simultaneously.

In an embodiment, the processor 460 may identify whether the second user's voice obtained through the microphone 430 and the second user's voice signal received from the external electronic device correspond. For example, the processor 460 may identify, by identifying whether both the second user's voice obtained through the microphone 430 and the voice corresponding to the second user's voice signal received from the external electronic device (e.g., the second user's voice obtained by the microphone of the external electronic device) has been obtained by the same utterance of the second user, may identify whether the second user's voice obtained through the microphone 430 and the second user's voice signal received from the external electronic device correspond to each other.

In an embodiment, the processor 460 may perform, if the second user's voice obtained through the microphone 430 correspond to the second user's voice signal received from the external electronic device, an operation of identifying the volume of the second user's voice and/or an operation of identifying the volume of the second user's voice obtained from the external electronic device.

In operation 705, in an embodiment, the processor 460 may identify whether a first volume of the second user's voice obtained through the microphone 430 is greater than or equal to a first reference intensity.

If it is identified that the first volume of the second user's voice obtained through the microphone 430 is greater than or equal to the first reference intensity in operation 705, in an embodiment, the processor 460 may control audio setting not to output the voice corresponding to the second user's voice, in operation 707.

In an embodiment, the processor 460 may control, based on identifying that the first volume of the second user's voice obtained through the microphone 430 is equal to or greater than the first reference strength, audio setting such that the voice signal corresponding to the second user's voice is not outputted through the speaker 440.

In an embodiment, the processor 460 may control, based on identifying that the first volume of the second user's voice obtained through the microphone 430 is equal to or greater than the first reference strength, the external electronic device such that the external electronic device does not transmit the second user's voice signal obtained by the external electronic device to the electronic device 401.

If it is identified that the first volume of the second user's voice obtained through the microphone 430 is less than the first reference intensity in operation 705, in an embodiment, in operation 709, the processor 460 may control, based on the second volume of the second user's voice obtained from the external electronic device, audio setting such that the voice signal corresponding to the second user's voice is outputted through the speaker 440.

In an embodiment, if the first volume of the second user's voice obtained through the microphone 430 is less than the first reference strength, and the second volume of the second user's voice obtained from the external electronic device is greater than or equal to the second reference intensity, the processor 460 may control audio setting such that a voice signal corresponding to the voice of the second user is outputted through the speaker 440.

In an embodiment, if the first volume of the second user's voice obtained through the microphone 430 is less than the first reference strength, and the second volume of the second user's voice obtained from the external electronic device is less than the second reference strength, the processor 460 may increase (e.g., amplifying the second user's voice) the volume of the second user's voice obtained from the external electronic device. The processor 460 may control audio setting such that the increased volume is outputted through the speaker 440.

In an embodiment, the processor 460 may perform operations 701, 703, 705, 707, and 709 based on a movement of the electronic device 401 and/or the external electronic device. For example, after the processor 460 controls the audio setting through operations 701, 703, 705, 707, and 709, if the movement of the electronic device 401 is detected using a sensor (e.g., a sensor supporting 6DoF) or whenever information indicating that the external electronic device is moved is received from the external electronic device through the communication module 410, the processor 460 may perform operations 701, 703, 705, 707, and 709. In an embodiment, if the electronic device 401 and/or the external electronic device are moved, the volume of the second user's voice obtained through the microphone 430 and/or the volume of the second user obtained by the external electronic device may be changed. The processor 460 may perform, by performing operations 701, 703, 705, 707, and 709 in response to detecting of the movement of the electronic device 401 and/or the external electronic device, an operation of adaptively controlling the audio setting according to a change in the volume of the second user obtained by the microphone 430 or in the volume of the second user obtained by the external electronic device.

In an embodiment, the processor 460 may predict, based on a history related to the second user (or an external electronic device), the volume of the second user's voice to be obtained through the microphone 430. For example, the volume of the second user's voice obtained through the microphone 430 in a state where the electronic device 401 and the external electronic device are separated by a first distance may be stored in the memory 450. The processor 460 may obtain a distance between the electronic device 401 and the external electronic device, and compare the obtained distance with the first distance stored in the memory 450. The processor 460 may predict the volume of the voice of the second user through the microphone 430, by comparing, based on the volume of the second user's voice stored in the memory 450, the obtained distance with the first distance stored in the memory 450.

In an embodiment, the processor 460 may control audio setting such that the voice signal corresponding to the voice of the second user is not outputted if the predicted volume is equal to or greater than the first reference intensity. In an embodiment, the processor 460 may control audio setting to output the voice signal corresponding to the voice of the second user through the speaker 440 if the predicted volume is less than the first reference intensity.

FIG. 8 is a flowchart 800 illustrating a method for controlling audio setting according to an embodiment of the disclosure.

In an embodiment, FIG. 8 may be a diagram for describing operations performed based on identifying that the first user and the second user are located in the same space. For example, FIG. 8 may be a diagram for describing operations comprised in or replacing operation 505 of FIG. 5. In an embodiment, FIG. 8 is, as described above, may be a drawing for explaining operations performed in a case that the earphone is connected to the electronic device 401 (e.g., in a case that an audio is set to be outputted through the earphone as the earphone is connected to the electronic device 401).

Referring to FIG. 8, in operation 801, in an embodiment, a processor 460 may identify the first volume of the second user's voice obtained through a microphone 430.

Since operation 801 is at least partially the same as or similar to operation 701 of FIG. 7, a detailed description thereof will be omitted.

In operation 803, in an embodiment, the processor 460 may identify the second volume of the second user's voice obtained by the external electronic device.

Since operation 803 is at least partially the same as or similar to operation 703 of FIG. 7, a detailed description thereof will be omitted.

In operation 805, in an embodiment, the processor 460 may identify whether the first volume of the second user's voice obtained through the microphone 430 is greater than or equal to a first reference intensity.

Since operation 805 is at least partially the same as or similar to operation 705 of FIG. 7, a detailed description thereof will be omitted.

If it is identified that the first volume of the second user's voice obtained through the microphone 430 is less than the first reference intensity in operation 805, in an embodiment, in operation 807, the processor 460, based on the second volume of the second user's voice obtained by the external electronic device, may control audio setting to output the voice signal corresponding to the voice of the second user through the earphone (e.g., the earphone wiredly or wirelessly connected to the electronic device 401).

In an embodiment, the processor 460 may control, if the first volume of the second user's voice obtained through the microphone 430 is less than the first reference strength, and the second volume of the second user's voice obtained by the external electronic device is equal to or greater than the second reference intensity, audio setting to output the voice signal corresponding to the second user's voice through the earphone.

In an embodiment, the processor 460 may increase, if the first volume of the second user's voice obtained through the microphone 430 is less than the first reference strength, and the second volume of the second user's voice obtained by the external electronic device is less than the second reference intensity, the volume of the second user's voice obtained by the external electronic device. The processor 460 may control audio setting such that the increased volume is output through the earphone.

If it is identified that the first volume of the second user's voice obtained through the microphone 430 is greater than or equal to the first reference intensity in operation 805, in an embodiment, in operation 809, the processor 460 may identify an intensity of an external noise.

In an embodiment, the processor 460 may identify the intensity of the external noise flowing into the microphone 430 together with the voice of the second user. For example, the processor 460 may identify the intensity of external noise flowing into the microphone 430 from the space around the electronic device 401 together with the second user's voice.

In operation 811, in an embodiment, the processor 460 may identify whether the intensity of the external noise is equal to or less than a reference intensity.

If it is identified that the intensity of the external noise is equal to or less than the reference intensity in operation 811, in an embodiment, in operation 813, the processor 460 may control the audio setting such that the voice signal corresponding to the voice of the second user is not output. For example, the processor 460 may control audio setting so that the second user's voice signal received from the external electronic device through the communication module 410 is not output through the earphone (and the speaker 440).

If it is identified that the intensity of the external noise exceeds the reference intensity in operation 811, in an embodiment, in operation 815, the processor 460 may control audio setting to output the voice signal corresponding to the voice of the second user through the earphone. For example, the processor 460 may control the earphone to output the second user's voice signal received from the external electronic device through the communication module 410.

In an embodiment, the processor 460 may perform, if it is identified that the intensity of the external noise exceeds the reference intensity, together with an operation of controlling the earphone to output the voice signal corresponding to the voice of the second user through the earphone, may perform an operation of blocking, using a noise cancellation (NC) function (e.g., an active noise cancellation function) of the earphone, the second user's voice and the external noise directly delivered to the first user's ear. For example, if it is identified that the intensity of the external noise exceeds the reference intensity, the processor 460 may control the earphone so that a microphone of the earphone obtains the voice of the second user and the external noise. The processor 460 may control, based on the obtained second user's voice and the external noise, the earphone such that the earphone generates a sound wave that cancels sound waves of the second user's voice and the external noise that are directly transferred to the first user's ear. The processor 460 may control the earphone so that the speaker 440 of the earphone outputs the generated sound wave.

In an embodiment, if it is identified that the intensity of the external noise exceeds the reference intensity, the processor 460 may perform, in replacing the operation of controlling the earphone to output the voice signal corresponding to the voice of the second user through the earphone, an operation of blocking, by using the noise canceling function of the earphone, the external noise between the voice of the second user and the external noise transmitted directly to the ear of the first user. For example, if it is identified that the intensity of the external noise exceeds the reference intensity, the processor 460 may control audio setting so that the voice signal corresponding to the voice of the second user is not outputted. The processor 460 may allow the second user's voice to be transmitted more clearly to the first user's ear by blocking the external noise directly delivered to the first user's ear. The processor 460 may block the external noise directly transmitted to the ear of the first user and amplify the voice of the second user. For example, the processor 460 may control the earphone such that the intensity of the second user's voice is increased while blocking the external noise directly transmitted to the ear of the first user.

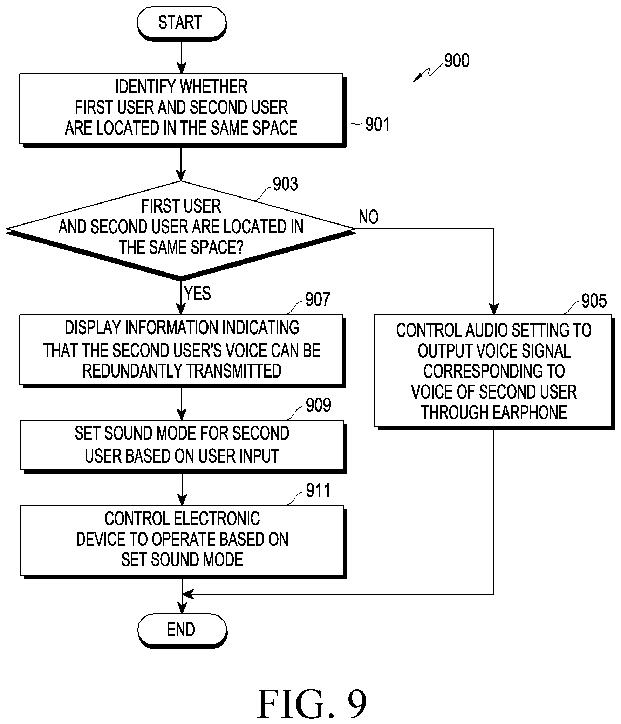

FIG. 9 is a flow chart 900 illustrating a method for controlling audio setting according to an embodiment of the disclosure.

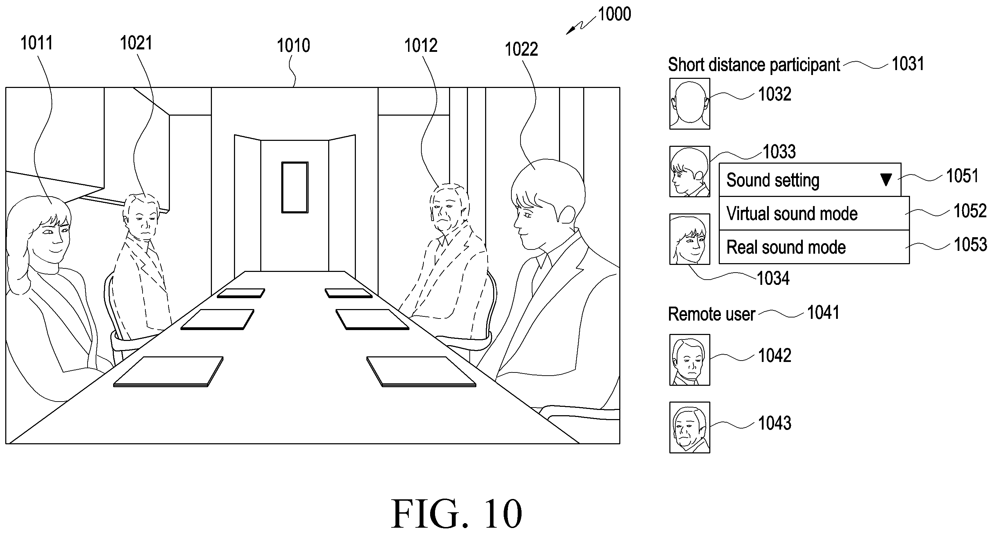

FIG. 10 is a diagram 1000 illustrating a method for controlling audio setting according to an embodiment of the disclosure.

Referring to FIGS. 9 and 10, in operation 901, in an embodiment, a processor 460 may identify whether the first user (the user of an electronic device 401) and the second user (the user of an external electronic device) are located in the same space.

Since operation 901 is at least partially the same as or similar to operation 501 of FIG. 5, a duplicate description thereof will be omitted.

In an embodiment, if a plurality of second users exist, the processor 460 may identify whether the first user and each of the plurality of second users are located in the same space. For example, while a designated application is executed in the electronic device 401 and the plurality of second users corresponding to the plurality of external electronic devices respectively, the processor 460 may identify whether the first user and each of the plurality of second users are located in the same space.

If it is identified that the first user and the second user are not located in the same space in operation 903, in an embodiment, in operation 905, the processor 460 may control audio setting to output the voice signal corresponding to the voice of the second user through the earphone.

Since operation 905 is at least partially the same as or similar to operation 815 of FIG. 8, a duplicate description thereof will be omitted.

In an embodiment, the processor 460, for at least one user (hereinafter referred to as "at least one third user") not located in the same space as the first user among the plurality of second users, may control audio setting so that a voice signal corresponding to a voice of the at least one third user is outputted through the earphone. If it is identified that the first user and the second user are located in the same space in operation 903, in an embodiment, in operation 907, the processor 460 may display, using the display 420, information indicating that the second user's voice can be redundantly transmitted to the first user (e.g., voice directly transmitted from the second user and the voice outputted through the earphone can be transmitted to the first user). However, it is not limited thereto, and the processor 460 may output the information through the speaker 440.

At operation 909, in an embodiment, the processor 460 may set a sound mode for the second user based on a user input.

In an embodiment, the sound mode may include a first sound mode and a second sound mode.

In an embodiment, the first sound mode may be a sound mode set to output, through an earphone (e.g., the earphone wiredly or wirelessly connected to the electronic device 401), the voice signal corresponding to the voice of the second user (e.g., the second user set as the first sound mode). In an embodiment, the first sound mode may a mode for controlling the earphone to output the voice signal corresponding to the second user's voice through the earphone, and for blocking the voice of the second user and external noise transmitted directly to the ear of the first user using the noise canceling function of the earphone.

In an embodiment, the second sound mode may be a sound mode set so that the voice signal corresponding to the voice of the second user (e.g., the second user set as the second sound mode) is not outputted. For example, the second sound mode may be a sound mode for controlling the earphone so that the voice signal corresponding to the voice of the second user is not outputted.

In an embodiment, the second sound mode may be a sound mode for controlling the earphone so that the voice signal corresponding to the second user's voice is not outputted and the external noise directly transmitted to the first user's ear is blocked. In an embodiment, the second audio mode may be a sound mode controlling the earphone to prevent the voice signal corresponding to the voice of the second user from being outputted, block the external noise directly transmitted to the ear of the first user, and amplify the strength of the voice of the second user.

In an embodiment, the processor 460 may set, based on a user input, the sound mode for each of at least one user (hereinafter referred to as "at least one fourth user") located in the same space as the first user from among the plurality of second users.

In an embodiment, FIG. 10 may show a screen displayed using the display 420 while a virtual conference application is executed in the electronic device 401 (e.g., AR glasses). For example, a first user may conduct a virtual conference with a plurality of second users using the virtual conference application. In an embodiment, as shown in scene 1010 of FIG. 10, fourth users 1011 and 1022 identified as being located in the same space as the first user are shown to the first user, and the virtual characters 1021 and 1012 corresponding to third users identified as being not located in the same space as the first user may be displayed using the display 420. In an embodiment, the processor 460 may set a sound mode for the fourth users 1011 and 1022 located in the same space as the first user. For example, in FIG. 10, the processor 460 may display, using the display 420, a list including the fourth users 1011 and 1022 identified as being located in the same space as the first user and the first user (e.g., an item 1031 including the first user and the fourth users 1011 and 1022, an image 1032 of the first user and images 1033 and 1034 of the fourth users 1011 and 1022), a list indicating third users identified as not being located in the same space as the first user (e.g., an item 1041 representing third users, images 1042 and 1043 of third users), and an object (for example, a button 1051) for setting a sound mode for each of the fourth users 1011 and 1022. The processor 460, based on a user input on the button 1051 displayed adjacent to the image 1033, may display, using the display 420, a button 1052 for setting a first sound mode (also referred to as "virtual sound mode") and a button 1053 representing a second sound mode (also referred to as "real sound mode") for a fourth user corresponding to the image 1033. The processor 460 may set the first sound mode for the fourth user corresponding to the image 1033 based on a user input on the button 1052. The processor 460 may set the second sound mode for the fourth user corresponding to the image 1033 based on a user input to the button 1053.

In an embodiment, the sound mode may be set for fourth users located in the same space as the first user.

In an embodiment, the processor 460 may output information indicating that the sound mode is set for the second user so that the second user for which the sound mode is set can know that the sound mode is set.

In operation 911, the processor 460 may control the electronic device 401 to operate based on the set sound mode.

In an embodiment, after the sound mode is set through operation 909, the processor 460 may control the electronic device 401 for the second user for which the sound mode is set, based on the set sound mode.

In an embodiment, the processor 460 may control the electronic device 401 to operate in the sound mode set for the second user only in a case that the second user for which the sound mode is set speaks.

In an embodiment, a method for controlling audio setting in the wearable electronic device 401 according to an embodiment may comprise identifying whether a first user of the wearable electronic device 401 and a second user of the external electronic device are located in a same space. The method may comprise based on identifying that the first user and the second user are located in the same space, controlling an audio setting such that a voice signal obtained from the external electronic device through the communication module 410 of the wearable electronic device 401 and corresponding to a voice of the second user is not outputted. The method may comprise controlling the audio setting such that the voice signal through the speaker 440 of the wearable electronic device 401 is outputted.

In an embodiment, identifying whether the first user of the wearable electronic device 401 and the second user of the external electronic device are located in the same space may comprise identifying whether the first user and the second user are located in a same room.

In an embodiment, identifying whether the first user of the wearable electronic device 401 and the second user of the external electronic device are located in the same space may comprise identifying whether a distance between the first user and the second user is less than or equal to a designated distance.

In an embodiment, controlling the audio setting such that the voice signal is not outputted, based on identifying that the first user and the second user are located in the same space, may comprise controlling the audio setting such that the voice signal is not outputted through the speaker 440.

In an embodiment, controlling the audio setting such that the audio signal is not outputted, based on identifying that the first user and the second user are located in the same space, may comprise based on the identifying that the first user and the second user are located in the same space, transmitting, through the communication module 410 to the external electronic device, a control signal configured to cause the external electronic device not to transmit the voice signal.

In an embodiment, the method may comprise based on a first user input, controlling the audio setting such that the voice signal is not outputted and based on a second user input, controlling the audio setting such that the voice signal through the speaker 440 is outputted.

In an embodiment, the method may further comprise identifying a first volume of the voice of the second user obtained through the microphone 430 of the wearable electronic device 401, identifying whether the first volume is greater than or equal to a first reference intensity, and based on the identifying that the first volume is greater than or equal to the first reference intensity, controlling the audio setting such that the voice signal is not outputted.

In an embodiment, the method may further comprise identifying a second volume of the voice of the second user obtained from the external electronic device, and based on identifying that the first volume is less than the first reference intensity, based on the second volume, control the audio setting such that the voice signal is outputted through the speaker 440.

In an embodiment, the method may further comprise identifying whether an earphone are connected to the wearable electronic device 401, based on the earphone being connected to the wearable electronic device 401, identifying an intensity of an external noise obtained through the microphone 430, identifying whether the intensity of the external noise is less than or equal to a reference intensity, based on identifying that the intensity of the external noise is equal to or less than the reference intensity, controlling the audio setting such that the voice signal is not outputted, and based on identifying that the intensity of the external noise exceeds the reference intensity, controlling the audio setting such that the voice signal is outputted through the earphone.

In an embodiment, the method may further comprise based on the second user including a plurality of second users, identifying at least one user located in a same space as the first user among the plurality of second users and setting a first sound mode or a second sound mode for each of the at least one user.

In an embodiment, the first sound mode may be a mode set to output a voice signal corresponding to a voice of a user set as the first sound mode through an earphone connected to the wearable electronic device 401, and the second sound mode may be a mode set not to output a voice signal corresponding to a user set as the second sound mode.

The electronic device according to an embodiment of the disclosure may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in an embodiment of the present disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

A embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device 401 comprising:
communication circuitry;
a speaker 440; and
at least one processor 460 operatively connected with the communication circuitry and the speaker 440,
wherein the at least one processor 460 is configured to:
identify whether a first user of the wearable electronic device 401 and a second user of an external electronic device are located in a same space,
based on identifying that the first user and the second user are located in the same space, control an audio setting such that a voice signal obtained from the external electronic device through the communication circuitry and corresponding to a voice of the second user is not outputted, and
based on identifying that the first user and the second user are not located in the same space, control the audio setting such that the voice signal is outputted through the speaker 440.

2. The wearable electronic device 401 of claim 1, wherein the at least one processor 460 is configured to:
identify whether the first user and the second user are located in a same room.

3. The wearable electronic device 401 of claim 1 or 2, wherein the at least one processor 460 is configured to:
identify whether a distance between the first user and the second user is less than or equal to a designated distance.

4. The wearable electronic device 401 of any one of claims 1 to 3, wherein the at least one processor 460 is configured to:
based on identifying that the first user and the second user are located in the same space, control the audio setting such that the voice signal is not outputted through the speaker 440.

5. The wearable electronic device 401 of any one of claims 1 to 4, wherein the at least one processor 460 is configured to:
based on identifying that the first user and the second user are located in the same space, transmit, through the communication circuitry to the external electronic device, a control signal configured to cause the external electronic device to refrain from transmitting the voice signal.

6. The wearable electronic device 401 of any one of claims 1 to 5, wherein the at least one processor 460 is configured to:
based on a first user input, control the audio setting such that the voice signal is not outputted, and
based on a second user input, control the audio setting such that the voice signal is outputted through the speaker 440.

7. The wearable electronic device 401 of any one of claims 1 to 6, further comprising:
a microphone 430,
wherein the at least one processor 460 is configured to:
identify a first volume of the voice of the second user obtained through the microphone 430,
identify whether the first volume is greater than or equal to a first reference intensity, and
based on identifying that the first volume is greater than or equal to the first reference intensity, control the audio setting such that the voice signal is not outputted.

8. The wearable electronic device 401 of any one of claims 1 to 7, wherein the at least one processor 460 is configured to:
identify a second volume of the voice of the second user obtained from the external electronic device, and
based on identifying that the first volume is less than the first reference intensity, based on the second volume, control the audio setting such that the voice signal is outputted through the speaker 440.

9. The wearable electronic device 401 of any one of claims 1 to 8, wherein the at least one processor 460 is configured to:
identify whether an earphone is connected to the wearable electronic device 401,
based on identifying that the earphone is connected to the wearable electronic device 401, identify an intensity of an external noise obtained through a microphone 430,
identify whether the intensity of the external noise is less than or equal to a reference intensity,
based on identifying that the intensity of the external noise is less than or equal to the reference intensity, control the audio setting such that the voice signal is not outputted, and
based on identifying that the intensity of the external noise exceeds the reference intensity, control the audio setting such that the voice signal is outputted through the earphone.

10. The wearable electronic device 401 of any one of claims 1 to 9, wherein the at least one processor 460 is configured to:
based on the second user including a plurality of second users, identify at least one user located in the same space as the first user among the plurality of second users, and
set a first sound mode or a second sound mode for each of the at least one user,
wherein the first sound mode is a mode set to output a voice signal corresponding to a voice of a user set as the first sound mode through an earphone connected to the wearable electronic device 401, and
wherein the second sound mode is a mode set to refrain from outputting a voice signal corresponding to a user set as the second sound mode.

11. A method for controlling an audio setting in a wearable electronic device 401, the method comprising:
identifying whether a first user of the wearable electronic device 401 and a second user of an external electronic device are located in a same space;
based on identifying that the first user and the second user are located in the same space, controlling the audio setting such that a voice signal obtained from the external electronic device through communication circuitry of the wearable electronic device 401 and corresponding to a voice of the second user is not outputted; and
based on identifying that the first user and the second user are not located in the same space, controlling the audio setting such that the voice signal is outputted through a speaker 440 of the wearable electronic device 401 .

12. The method of claim 11, wherein the identifying of whether the first user of the wearable electronic device 401 and the second user of the external electronic device are located in the same space comprises identifying whether the first user and the second user are located in a same room.

13. The method of claims 11 or 12, wherein the identifying of whether the first user of the wearable electronic device 401 and the second user of the external electronic device are located in the same space comprises identifying whether a distance between the first user and the second user is less than or equal to a designated distance.

14. The method of any one of claims 11 to 13, wherein the controlling of the audio setting such that the voice signal is not outputted comprises controlling the audio setting such that the voice signal is not outputted through the speaker 440.

15. The method of any one of claims 11 to 14, wherein the controlling of the audio setting such that the voice signal is not outputted comprises:
based on the identifying that the first user and the second user are located in the same space, transmitting, through the communication circuitry to the external electronic device, a control signal configured to cause the external electronic device to refrain from transmitting the voice signal.
